(19) **Europäisches Patentamt**
**European Patent Office**
**Office européen des brevets**

(11) **EP 4 429 138 A1**

(12) **EUROPEAN PATENT APPLICATION**
published in accordance with Art. 153(4) EPC

(43) Date of publication:
**11.09.2024 Bulletin 2024/37**

(21) Application number: **22948663.4**

(22) Date of filing: **01.07.2022**

(51) International Patent Classification (IPC):
**H04L 1/00** *(2006.01)*

(52) Cooperative Patent Classification (CPC):
**H04L 1/00**

(86) International application number:
**PCT/CN2022/103273**

(87) International publication number:
**WO 2024/000563 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **New H3C Technologies Co., Ltd.**
**Hangzhou, Zhejiang 310052 (CN)**

(72) Inventors:
• **KONG, Lei**
  **Beijing 100102 (CN)**
• **WU, Pin**
  **Beijing 100102 (CN)**

(74) Representative: **Grünecker Patent- und Rechtsanwälte PartG mbB Leopoldstraße 4 80802 München (DE)**

(54) **DATA TRANSMISSION METHOD AND APPARATUS, STORAGE MEDIUM, AND ELECTRONIC DEVICE**

(57) The present specification discloses a data transmission method, apparatus, storage medium and electronic device. In the examples of the present specification, in the case where either UE transmits UL data to a BS or where the BS transmits DL data to the UE, the BS can obtain an adjusted transmission strategy according to a channel quality parameter which is determined based on the checking result of each data and which is used when various data are transmitted between the UE and the BS, and send the adjusted transmission strategy to the UE. Therefore, changes of the channel quality parameter between the transmitter and the receiver can be obtained based on the checking result of each of the various data, and thus the transmission strategy according to the changes of the channel quality parameter can be obtained, which can effectively improve a data transmission reliability on the basis of ensuring a data transmission rate.

FIG. 1

EP 4 429 138 A1

**Description**

**TECHNICAL FIELD**

The present specification relates to the field of mobile communications, and in particular, relates to a data transmission method, apparatus, storage medium and electronic device.

**BACKGROUND**

For the 5th generation mobile communication technologies (5G) or the 6th generation mobile communication technologies (6G) in the field of mobile communications, the data transmission reliability in a network communication system is very important to a further ultra-reliability and low-latency communication (FURLLC) scenario, such as a motion control scenario and a Tactile Internet.

In the case of a semi-static scheduling in the related arts, a transmitter transmits the same data to a receiver through a plurality of time-frequency resources in accordance with a pre-configured number of repetitions and a certain modulation and coding scheme (MCS). The receiver combines multiple received data to obtain a final combined data, and performs a cyclic redundancy check (CRC) on the final combined data to obtain a final checking result. It is determined whether to trigger a hybrid automatic repeat request (HARQ) based on the final checking result, so as to improve the data transmission reliability.

In the case of the semi-static scheduling in the related arts, however, both the number of repetitions and the MCS are pre-configured and cannot be adaptively adjusted according to the varies of channel state between the transmitter and the receiver. As the channel state between the transmitter and the receiver deteriorates continuously, the number of repetitions and the MCS that are pre-configured, if still used, may result in errors in the data transmissions between the transmitter and the receiver. As the channel state between the transmitter and the receiver improves continuously, the number of repetitions and the MCS that are pre-configured, if still used, may slower the data transmission rate between the transmitter and the receiver or result in a waste of time-frequency resources.

**SUMMARY**

The examples of the present specification provide a data transmission method, apparatus, storage medium and electronic device, so as to partially solve the problems existing in the above-mentioned related arts.

The examples of the present specification take the following technical solutions.

The present specification provides a data transmission method, which includes: receiving, by user equipment (UE), various downlink (DL) data transmitted by a base station (BS); and/or, transmitting, by the UE, various uplink (UL) data to the BS, so that the BS obtains checking results of the various UL data; wherein various data transmitted by a transmitter is obtained by encoding a same data with redundant information separately; when the UE receives the various DL data transmitted by the BS, for each of the various DL data, checking, by the UE, the DL data according to other DL data of the various DL data received before receiving the DL data, obtaining, by the UE, a checking result of the DL data, and feeding, by the UE, the checking result of each DL data back to the BS; and receiving an transmission strategy that has been adjusted by the BS, and performing data transmissions with the BS in accordance with the adjusted transmission strategy; wherein the adjusted transmission strategy is determined by the BS according to a target channel quality parameter, and the target channel quality parameter is determined by the BS based on the checking result of each of the various data transmitted by the transmitter.

Optionally, feeding the checking result of each DL data back to the BS includes: determining, based on the checking result of each DL data, feedback information related to the checking result of each DL data, and sending the feedback information to the BS.

Optionally, determining, based on the checking result of each DL data, feedback information related to the checking result of each DL data includes: determining, based on the checking result of each DL data, a number of times that the BS transmits DL data successfully; and determining, based on the number of times that the BS transmits DL data successfully, the feedback information including the number of times that the BS transmits DL data successfully.

Optionally, determining, based on the number of times that the BS transmits DL data successfully, the feedback information including the number of times that the BS transmits DL data successfully includes: determining an index value matching the number of times that the BS transmits DL data successfully, and determining the feedback information including the index value.

Optionally, determining, based on the checking result of each DL data, the feedback information related to the checking result of each DL data includes: determining, based on the checking result of each DL data, a number of times that the BS fails to transmit DL data, and determining, based on the number of times that the BS fails to transmit DL data, the feedback information including the number of times that the BS fails to transmit DL data.

Optionally, the target channel quality parameter is obtained by the BS through compensating a channel quality parameter used when the transmitter transmits the various data according to a channel compensation parameter, wherein the channel compensation parameter is determined by the BS based on the checking result of each of the various data transmitted by the transmitter.

Optionally, the adjusted transmission strategy includes at least a target modulation and coding scheme (MCS). The target MCS is determined by the BS according to a mapping relationship between target channel quality parameters and transmission strategies.

Optionally, the adjusted transmission strategy at least includes an adjusted number of repetitions. The adjusted number of repetitions is obtained by the BS, when an MCS adopted by the transmitter for transmitting the various data has reached a maximum or minimum value, through adjusting a number of repetitions adopted by the transmitter for transmitting the various data according to the target channel quality parameter.

Optionally, receiving the transmission strategy which has been adjusted by the BS includes: receiving the adjusted number of repetitions sent by the BS via radio resource control (RRC); or receiving the adjusted number of repetitions sent by the BS via downlink control information (DCI); or receiving the adjusted number of repetitions sent by the BS via a medium access control-control element.

The present specification provides a data transmission method, which includes: receiving, by a BS, various UL data transmitted by UE; and/or, transmitting, by the BS, various DL data to the UE, so that the UE obtains checking results of the various DL data; wherein various data transmitted by a transmitter is obtained by encoding a same data with redundant information separately; when the BS receives the various UL data transmitted by the UE, for each of the various UL data, checking, by the BS, the UL data according to other UL data of the various UL data received before receiving the UL data, and obtaining, by the BS, a checking result of the UL data, and when the BS transmits the various DL data to the UE, receiving, by the BS, the checking results of the various DL data fed back from the UE; determining a target channel quality parameter based on the checking result of each of the various data transmitted by the transmitter; obtaining an adjusted transmission strategy by adjusting a transmission strategy adopted by the transmitter for transmitting the various data according to the target channel quality parameter; and sending the adjusted transmission strategy to the UE, so that the UE performs data transmissions with the BS in accordance with the adjusted transmission strategy.

Optionally, receiving the checking results of the various DL data fed back from the UE includes: receiving feedback information sent by the UE, and determining, according to the feedback information, the checking results of the various DL data fed back from the UE; wherein the checking results of the various DL data are obtained by the UE through checking each of the various DL data transmitted by the BS according to other DL data of the various DL data received before receiving the DL data.

Optionally, determining the target channel quality parameter based on the checking result of each of the various data transmitted by the transmitter includes: determining a channel compensation parameter based on the checking result of each of the various data transmitted by the transmitter; and obtaining the target channel quality parameter by compensating a channel quality parameter used when the transmitter transmits the various data according to the channel compensation parameter.

Optionally, the adjusted transmission strategy includes at least an MCS. Obtaining the adjusted transmission strategy by adjusting the transmission strategy adopted by the transmitter for transmitting the various data according to the target channel quality parameter includes: determining, according to a mapping relationship between target channel quality parameters and transmission strategies, a target MCS corresponding to the target channel quality parameter transmission as the adjusted transmission strategy.

Optionally, the adjusted transmission strategy at least includes a number of repetitions. Obtaining the adjusted transmission strategy by adjusting the transmission strategy adopted by the transmitter for transmitting the various data according to the target channel quality parameter includes: when an MCS adopted by the transmitter for transmitting the various data has reached a maximum or minimum value, adjusting, according to the target channel quality parameter, a number of repetitions adopted by the transmitter for transmitting the various data, and obtaining an adjusted number of repetitions as the adjusted transmission strategy.

Optionally, sending the adjusted transmission strategy to the UE includes: sending the adjusted number of repetitions to the UE via RRC; or, sending the adjusted number of repetitions to the UE via DCI; or, sending the adjusted number of repetitions to the UE via a media access control-control element.

Optionally, sending the adjusted transmission strategy to the UE includes: sending the adjusted transmission strategy to the UE when monitoring that the transmission strategy adopted by the transmitter for transmitting the various data runs longer than a valid working duration.

The present specification provides a data transmission apparatus, which includes: a first data transmitting module, configured to receive, by UE, various DL data transmitted by a BS; and/or, transmit, by the UE, various UL data to the BS, so that the BS obtains checking results of the various UL data; wherein various data transmitted by a transmitter is obtained by encoding a same data with redundant information separately; a checking module, configured to when the UE receives the various DL data transmitted by the BS, for each of the various DL data, check, by the UE, the DL data according to other DL data of the various DL data received before receiving the DL data, obtain, by the UE, a checking result of the DL data, and feed, by the UE, the checking result of each DL data back to the BS; and a second data transmitting module, configured to receive a transmission strategy that has been adjusted by the BS, and perform data transmissions with the BS in accordance with the adjusted transmission strategy; wherein the adjusted transmission strategy is determined by the BS according to a target channel quality parameter, and the target channel quality parameter is determined by the BS based on the checking result of each of the various data transmitted by the transmitter.

The present specification provides a data transmission apparatus, which includes: a first data transmitting module, configured to receive, by a BS, various UL data transmitted by UE; and/or, transmit, by the BS, various DL data to the UE, so that the UE obtains checking results of the various DL data; wherein various data transmitted by a transmitter is obtained by encoding a same data with redundant information separately; a checking module, configured to when the BS receives the various UL data transmitted by the UE, for each of the various UL data, check, by the BS, the UL data according to other UL data of the various UL data received before receiving the UL data, and obtain, by the BS, a checking result of the UL data, and when the BS transmits the various DL data to the UE, receive, by the BS, the checking results of the various DL data fed back from the UE; a determining module, configured to determine a target channel quality parameter based on the checking result of each of the various data transmitted by the transmitter; an adjusting module, configured to obtain an adjusted transmission strategy by adjusting a transmission strategy adopted by the transmitter for transmitting the various data according to the target channel quality parameter; and a second data transmitting module, configured to send the adjusted transmission strategy to the UE, so that the UE performs data transmissions with the BS in accordance with the adjusted transmission strategy.

The present specification provides a computer-readable storage medium storing a computer program. The computer program, when executed by one or more processors, implements the above data transmission methods.

The present specification provides an electronic device, which includes one or more memories, one or more processors, and a computer program stored in the one or more memories and capable of running on the one or more processors. The one or more processors, when executing the program, implement the above data transmission methods.

At least one of the above technical solutions taken in the examples of the present specification can achieve the following beneficial effects.

According to the examples of the present specification, in the case where either UE transmits UL data to a BS or where the BS transmits DL data to the UE, the BS can determine a target channel quality parameter based on the checking result of each of the various data, obtain an adjusted transmission strategy according to the target channel quality parameter, and send the adjusted transmission strategy to the UE. Therefore, changes of the channel quality parameter between the BS and the UE can be obtained based on the checking result of each of the various data, and thus the transmission strategy according to the changes of the channel quality parameter can be obtained, which can effectively improve a data transmission reliability on the basis of ensuring a data transmission rate.

## BRIEF DESCRIPTION OF THE DRAWINGS

The accompanying drawings described here serve to further understand the present specification and constitute a part of the present specification. The examples in the present specification and their descriptions serve to explain the present specification, rather than introduce any inappropriate limitations. In the drawings:

FIG. 1 is a schematic flowchart of adjusting a transmission strategy adopted for data transmissions when a BS transmits DL data to UE according to an example of the present specification.
FIG. 2 is a schematic flowchart of adjusting a transmission strategy adopted for data transmissions when UE transmits UL data to a BS according to an example of the present specification.
FIG. 3 is a schematic diagram of a data structure of an MAC CE according to an example of the present specification.
FIG. 4 is a schematic structure diagram of a data transmission apparatus according to an example of the present specification.
FIG. 5 is a schematic structure diagram of a data transmission apparatus according to an example of the present specification.
FIG. 6 is a schematic structure diagram of an electronic device according to an example of the present specification.

## DETAILED DESCRIPTION OF THE EMBODIMENTS

Ultra-reliability and low-latency communication (URLLC) is one of three main application scenarios of 5G communication systems, which is widely used in critical service fields such as industrial control, autonomous driving, smart grid management, and augmented reality/virtual reality. According to the definition of 3GPP, the main goals of the URLLC are a latency of 1ms and a reliability of 99.999%. In the futural 6G communication system, the targets of the latency and the reliability are enhanced up to 0.1ms and greater than 99.9999%, respectively, so as to match further ultra-reliability and low-latency communication of new application scenarios, such as a motion control scenario and a tactile network scenario. In order to match the new application scenarios, new codec technologies, like adaptive modulation and coding, transmit/receive diversity, hybrid automatic repeat request (HARQ), packet data convergence protocol (PDCP) retransmission, slot aggregation, repetition and other technologies, may be employed in the futural 6G systems to improve the data transmission reliability. Since the slot aggregation is an implementation way of the repetition, the slot aggregation and the repetition are not to be distinguished but collectively referred to as the repetition technology in the following description.

A semi-static scheduling means that all or part of scheduling information may be configured in advance via high layer signaling. For the case where only part of the scheduling information is configured, specific scheduling information may be delivered and activated through a physical downlink control channel (PDCCH), and is valid until being deactivated or the next reconfiguration/activation. The part of the scheduling information configured in advance via the high layer signaling may include a scheduling period, HARQ feedback resources, HARQ processes, a modulation coding scheme (MCS) table, a number of repetitions and other information. The specific scheduling information during an activation process may include MCS, transmission port(s), time-frequency resources, precoding, a layer number and other information. Once the configured information or the specific scheduling information during the activation process is successfully activated, the subsequent data transmissions are to follow the inherent information such as the MCS, the port(s) and the time-frequency resources. The semi-static scheduling may include grant-free scheduling and a semi-persistent scheduling.

In the first related art, the repetition technology is applied in the semi-static scheduling. In particular, for a downlink (DL) transmission, a base station (BS) uses the same or different redundancy versions to encode the same data according to the number of repetitions pre-configured in the semi-static scheduling and obtains multiple data, and then, transmits multiple data to user equipment (UE) through different time-domain or frequency-domain resources according to the pre-configured MCS. The UE combines the data transmitted in the different time-domain or frequency-domain resources as instructed, decodes and obtains the original data, and then, performs a cyclic redundancy check (CRC) checking on the decoded original data. After the CRC, if the final combined and decoded data is correct, an acknowledgment (ACK) message is fed back through a physical uplink control channel (PUCCH) or a physical uplink shared channel (PUSCH). Otherwise, a negative acknowledgment (NACK) message is fed back. After receiving the message fed back from the UE, the BS determines whether to trigger an HARQ retransmission.

For the UL transmissions, the BS directly combines multiple received data, decodes the combined data to obtain the original data, performs the CRC checking on the original data to obtain the final checking result, and determines whether to trigger the HARQ retransmission based on the final checking result.

In the first related art, some scheduling information in a static scheduling, such as the MCS, the number of repetitions, the precoding and the layer number, is pre-configured and cannot be adjusted properly as the wireless channel between the BS and the UE varies, so that the data transmission rate and the data transmission reliability cannot be satisfied simultaneously to a certain extent.

The MCS may be pre-configured as the smallest MCS0 to ensure the reliability, but a higher-order MCS may be used to improve the data transmission rate in the case where every transmission can be received correctly due to good channel conditions in an actual data transmission process. However, the MCS is pre-configured via the high layer signaling or an activation message and cannot be adaptively adjusted according to the state of the wireless channel, which reduces the system transmission efficiency. On the contrary, a greater pre-configured MCS causes data transmission errors in the case of poor channel conditions. The HARQ retransmission may be employed to improve the reliability but causes additional latency introduced by the HARQ retransmission.

The number of repetitions is pre-configured. In the case of poor channel conditions, it may happen that the data transmitted for the first N times cannot be correctly decoded, but the data transmitted at the N-th time may be correctly decoded by combining with the first N data. At this time, the ACK is fed back and the BS learns that the UE has received the data correctly. However, as the channel state deteriorates by degrees, it may be followed that the data cannot be correctly received through N repetitions, which results in a decrease in the data transmission reliability. In the case of good channel conditions, the data transmitted each time can be correctly decoded. At this time, the time-frequency resources may be saved if the number of repetitions is reduced. However, the repetitions are pre-configured via the high layer signaling or the activation message and the number of repetitions cannot be adaptively adjusted according to the state of the wireless channel, which causes a waste of the time-frequency resources.

In the second related art, the BS adjusts the MCS with a link adaptation (LA) technology. That is, a channel quality indicator (CQI) or a signal-to-interference-noise ratio (SINR) is compensated based on the final checking result, and the MCS is re-determined based on the compensated CQI or SINR.

With respect to the LA technology, by taking the CQI as an example, the CQI compensation process is described (to which the SINR compensation process is similar). According to the final checking result, the CQI compensation process is:

$$CQI_{Avg}(t) = \begin{cases} CQI_{avg}(t-1) + \Delta_{up}, & \text{if the feedback information = ACK} \\ CQI_{avg}(t-1) - \Delta_{down}, & \text{if the feedback information = NACK} \\ CQI_{avg}(t-1), & \text{if there are no feedback information} \end{cases}$$

In particular, $\Delta_{up}$ and $\Delta_{down}$ indicate the step size of CQI upward compensation and the step size of CQI downward compensation, respectively, and follow the following conditions:

$$\Delta_{down} = \frac{\Delta_{up}\left(1 - BLER_{target}\right)}{BLER_{target}}, \quad \text{if } \Delta_{down} \gg \Delta_{up}$$

In particular, $BLER_{target}$ indicates a block error ratio (BLER) target to be satisfied, $BLER_{target}$ = 0.1 for an enhanced mobile broadband (eMBB) user and $BLER_{target}$ = 0.00001 for a URLLC user. $\Delta_{down}$ and $\Delta_{up}$ are expected to be adjusted according to service requirements and an actual convergence situation.

However, the repetition technology in the first related art only takes into account the final checking result after checking the final combined data, rather than any checking result corresponding to the intermediate transmitted data, so that the varies of the channel state during the data transmissions cannot be determined based on the checking results corresponding to the intermediate transmitted data. As a result, even if the LA technology in the second related art is employed, it neither accurately compensates the CQI or the SINR, nor improves the data transmission reliability and the data transmission effectiveness. For example, the CRC checking on the data transmitted for the first time is failed due to the deterioration of the channel state when the UE receives the data transmitted for the first time, the CRC checking on the data transmitted for the second time combined with the data transmitted for the first time is successful because a coding gain of the second transmission compensates the effect of the deterioration of the channel state, and the ACK message is fed back to the BS. The BS compensates the average CQI upwards according to the formula corresponding to the ACK message fed back, which may lead to the selection of the higher-order MCS. However, the transmission adopting the higher-order MCS may cause data transmission errors due to poor channel conditions.

In view of the above technical problems, the present specification provides corresponding data transmission methods, which focus on applying the repetition technology and the LA technology to the semi-static scheduling or a dynamic scheduling, so as to adaptively adjust a data transmission strategy between the BS and the UE based on the checking results of all the data transmitted between the BS and the UE. In particular, the transmission strategy may include the number of repetitions, the MCS, the time-frequency resources for data transmissions, the transmission port(s), the precoding, etc.

That is, the changes of the channel quality parameter between the transmitter and the receiver are obtained based on the checking result of each data transmitted between the BS and the UE, and thus the transmission strategy according to the changes of the channel quality parameter is obtained, which can effectively improve the data transmission reliability on the basis of ensuring the data transmission rate.

In the present specification, it may be specifically divided into two cases, the uplink (UL) transmission and the DL transmission. The main difference is that in the DL process, the checking results of various data, i.e., the DL data transmitted from the BS to the UE, is determined by the UE and fed back to the BS, while in the UL process, the checking results of various data, i.e., the UL data transmitted from the UE to the BS, is determined by the BS itself. Since the adjusted transmission strategy is finally determined by the BS based on the obtained checking result in either case, the BS does not distinguish between the UL case or the DL case during obtaining the checking data to determine the adjusted transmission strategy. Therefore, in the process that the BS obtains the checking result to determine the adjusted transmission strategy, both the UL data and the DL data may be referred to as data. That is, based on the checking result of each data, the BS can determine the channel quality parameter for transmitting the various data between the BS and the UE, and according to the channel quality parameter, adjust the transmission strategy adopted for transmitting the various data between the UE and the BS, obtain the adjusted transmission strategy, and send the adjusted transmission strategy to the UE.

The following description of this specification is divided into the UL case and the DL case for different situations, and describes in detail how to implement the data transmission method for the different situations.

In order to make the purposes, the technical solutions and the advantages of the present specification clearer, the technical solutions of the present specification are clearly and completely described below in conjunction with specific examples in the present specification and the corresponding drawings thereof. It is obvious that the described examples are only some, rather than all of the examples of the present specification. Based on the examples provided in the present specification, all of other examples, which are obtained by those of ordinary skill in the art without creative work, fall within the protection scope of the present specification.

The technical solutions provided by various examples of the present specification are described in detail below in conjunction with the accompanying drawings.

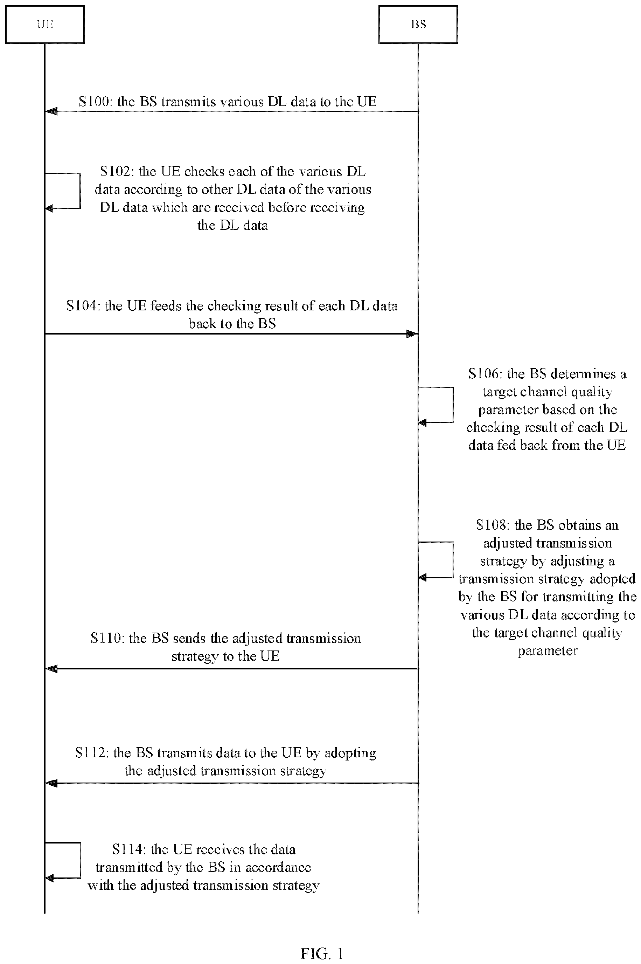

FIG. 1 is a schematic flowchart of adjusting a transmission strategy adopted for data transmissions when a BS transmits DL data to UE according to an example of the present specification, which includes:

S100: the BS transmits various DL data to the UE.
S102: the UE checks each of the various DL data according to other DL data of the various DL data which are received before receiving the DL data.
S104: the UE feeds the checking result of each DL data back to the BS.
S106: the BS determines a target channel quality parameter based on the checking result of each DL data fed back from the UE.
S108: the BS obtains an adjusted transmission strategy by adjusting a transmission strategy adopted by the BS for transmitting the various DL data according to the target channel quality parameter.
S110: the BS sends the adjusted transmission strategy to the UE.
S112: the BS transmits data to the UE by adopting the adjusted transmission strategy.
S114: the UE receives the data transmitted by the BS in accordance with the adjusted transmission strategy.

The details of the specific content are as follows.

In the examples of the present specification, the BS may be a transmitter. The BS may encode a same original data with redundant information respectively based on a current number of repetitions, and obtain multiple encoded data as the various DL data. The quantity of the DL data is the same as the number of repetitions. Each of the various DL data may consist of the original data and the redundant information. In addition, the redundant information carried by each DL data may be different or identical.

After obtaining the various DL data, the BS may transmit them to the UE through designated time-frequency resources in accordance with the current transmission strategy adopted for transmitting the various DL data between the BS and the UE. In particular, the various DL data may be transmitted in the designated time-frequency resources in one slot, or transmitted in the designated time-frequency resources in different slots. In addition, the designated time-frequency resources corresponding to the various DL data may be pre-configured, or may be obtained by detecting a PDCCH. The UE mentioned here may refer to a terminal device such as a mobile phone and a computer.

The UE receives the various DL data transmitted by the BS from the designated time-frequency resources, and checks the various received DL data. For each DL data, the UE may check the DL data according to other DL data of the various DL data received before receiving the DL data and obtain the checking result of the DL data.

In particular, the DL data is combined with the other DL data received before to obtain combined data. Then, the combined data is decoded according to a coding rate corresponding to an MCS to obtain the decoded data. Finally, the decoded data is checked to obtain a checking result of the DL data. The combining manner may be an incremental redundancy combining or a Chase combining. The checking way may be a CRC checking.

After decoding and checking each received DL data, the UE may obtain the checking result of each DL data.

In addition, the checking result of each DL data may include being successful or being failed. Being successful may be represented by "1", and being failed may be represented by "0".

It should be noted that during performing the repetitions, since the UE combines the other DL data received before each DL data when checking the DL data, it is against in theory a case where the checking on the DL data is failed but the checking on other DL data received before the DL data is successful. In the actual transmission process, the failed checking on the DL data, even if happens, is considered to be successful. In addition, during performing the repetitions, as long as there is the DL data on which the checking is successful, the original data corresponding to the DL data is considered to be transmitted successfully.

For example, taking two repetitions as an example, the BS obtains two DL data by encoding the original data, and transmits these two DL data to the UE. The UE checks the two transmitted DL data. Since the DL data corresponding to the second transmission is to be combined with the DL data corresponding to the first transmission, the actual transmission process is generally against the case where the checking on the DL data corresponding to the first transmission is successful but the checking on the DL data corresponding to the second transmission is failed. If such case occurs, the checking on the DL data corresponding to the second transmission is still considered to be successful. Therefore, all of the possible checking results of the two transmitted DL data are shown in Table 1.

Table 1

| The checking result of the DL data corresponding to the first transmission | The checking result of the DL data corresponding to the second transmission | Two checking results |
|---|---|---|
| Successful: 1 | Successful: 1 | 11 |
| Failed: 0 | Successful: 1 | 01 |
| Failed: 0 | Failed: 0 | 00 |

In addition, when the number of repetitions is greater than two, the UE decodes and performs the CRC checking on the DL data of all the received repetitions to obtain the checking results of all the DL data. Similar to two repetitions, the checking results of transmitting all the DL data are divided into three cases: the first case is that the checking results of all the DL data are successful; the second case is that the checking results of the DL data corresponding to the first N-th transmissions are failed and the checking results of the DL data corresponding to the (N+1)th and subsequent transmissions are all successful, where the N is a positive integer, and the third case is that the checking results of all the DL data are failed.

It should be noted that the data transmission methods provided in the present specification may be applied to a semi-static scheduling and a dynamic scheduling (e.g., a granted scheduling), and the data transmission methods provided in the present specification may be applied to 5G-Advanced or 6G.

Since the transmission strategy adopted for performing the data transmissions between the UE and the BS is determined by the BS, the UE, after determining the checking result of each DL data, is to feed the determined checking results of the various DL data back to the BS, so that the BS determines the transmission strategy adopted for performing the data transmissions between the BS and the UE based on the checking results of the various DL data.

In particular, the UE determines the feedback information related to the checking results of each DL data based on the checking result of each DL data, and sends the feedback information to the BS. At the same time, the UE sends to the BS instantaneous channel quality parameter which is monitored when the various DL data are transmitted between the BS and the UE. The instantaneous channel quality parameter may include an instantaneous CQI.

The BS receives the above feedback information and the instantaneous channel quality parameter sent by the UE, and may determine a channel compensation parameter based on the checking result of each DL data involved in the feedback information. Then, the BS compensates the channel quality parameter used when the BS transmits the various DL data according to the channel compensation parameter and the instantaneous channel quality parameter to obtain a compensated channel quality parameter as a target channel quality parameter. Finally, the BS adjusts the transmission strategy adopted by the BS for transmitting the various DL data according to the target channel quality parameter and obtains the adjusted transmission strategy.

For the semi-static scheduling, when monitoring that the transmission strategy adopted for the current DL data transmission between the UE and the BS runs longer than a valid working duration, the BS sends the adjusted transmission strategy to the UE. The UE receives the adjusted transmission strategy, and updates the transmission strategy adopted for transmitting the various DL data between the UE and the BS in accordance with the adjusted transmission strategy. Then, data transmissions are performed in accordance with the updated transmission strategy (i.e., the adjusted transmission strategy). In addition, for the dynamic scheduling (e.g., the granted scheduling), the transmission strategy may be sent to the UE after every adjustment, and the UE performs data transmissions in accordance with the adjusted transmission strategy. It can be understood that when monitoring that the transmission strategy adopted for performing the current DL data transmission between the UE and the BS runs longer than the valid working duration, the BS sends the determined transmission strategy after the newest adjustment to the UE for use.

After the UE determines the adjusted transmission strategy, the BS may adopt the adjusted transmission strategy to transmit data to the UE, and the UE receives the data transmitted by the BS in accordance with the adjusted transmission strategy, and decodes and checks the received data.

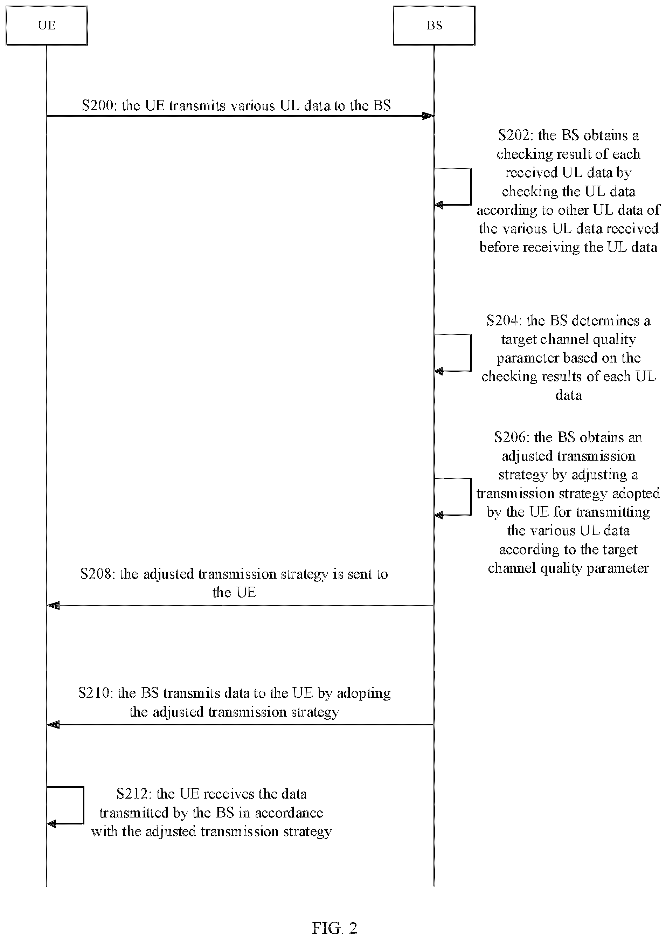

FIG. 2 is a schematic flowchart of adjusting a transmission strategy adopted for data transmissions when UE transmits UL data to a BS according to an example of the present specification, which includes:

S200: the UE transmits various UL data to the BS.

S202: the BS obtains a checking result of each received UL data by checking the UL data according to other UL data of the various UL data received before receiving the UL data.

S204: the BS determines a target channel quality parameter based on the checking results of each UL data.

S206: the BS obtains an adjusted transmission strategy by adjusting a transmission strategy adopted by the UE for transmitting the various UL data according to the target channel quality parameter.

S208: the adjusted transmission strategy is sent to the UE.

S210: the BS transmits data to the UE by adopting the adjusted transmission strategy.

S212: the UE receives the data transmitted by the BS in accordance with the adjusted transmission strategy.

The details of the specific content are as follows.

In the UL case, the transmitter is the UE, and the various data transmitted by the transmitter are the UL data. The BS determines a channel compensation parameter based on the obtained checking result of each UL data. Then, the BS compensates the channel quality parameter for transmitting the various UL data between the BS and the UE according to the channel compensation parameter, and obtain a target channel quality parameter. The channel quality parameter in the UL process may include an average SINR. Finally, the BS obtains the adjusted transmission strategy by adjusting the transmission strategy adopted for transmitting the various UL data between the BS and the UE according to the target channel quality parameter.

Similarly, for the semi-static scheduling, when monitoring that the transmission strategy adopted for the current UL data transmission between the UE and the BS runs longer than a valid working duration, the BS sends the adjusted transmission strategy to the UE. The UE performs data transmissions in accordance with the adjusted transmission strategy. In addition, for the dynamic scheduling (e.g., the granted scheduling), the transmission strategy may be sent to the BS after every adjustment, and the BS performs data transmissions in accordance with the adjusted transmission strategy.

Thereafter, the BS adopts the adjusted transmission strategy to transmit data to the UE, and the UE receives the data transmitted by the BS in accordance with the adjusted transmission strategy and decodes and checks the received data.

It can be noted that, in either case, the DL transmission or the UL transmission, the greater the channel quality parameter when the various data are transmitted, the higher an MCS order in the adjusted transmission strategy, and the fewer the number of repetitions in the adjusted transmission strategy. On the contrary, the smaller the channel quality parameter when the various data are transmitted, the lower the MCS order in the adjusted transmission strategy, and the greater the number of repetitions in the adjusted transmission strategy.

It can be seen from the methods illustrated in FIG. 1 and FIG. 2 that, in either case where the UE transmits the UL data to the BS or the BS transmits the DL data to the UE, the BS may determine, based on the checking results of each data, the channel quality parameter for transmitting the various data between the UE and the BS, obtain the adjusted transmission strategy, and sends the adjusted transmission strategy to the UE. Therefore, the changes of the channel quality parameter between the transmitter and the receiver may be obtained based on the checking result of each data, and thus the transmission strategy according to the changes of the channel quality parameter may be obtained, which can effectively improve the data transmission reliability on the basis of ensuring the data transmission rate.

Further, the following describes in detail how to adjust the transmission strategy between the BS and the UE separately in the DL transmission case and in the UL transmission case.

With respect to the DL transmission: the UE is to send the checking result of each DL data to the BS after determining it. That is, the UE determines, based on the checking result of each DL data, the feedback information related to the checking results of each DL data, and sends the feedback information to the BS. The feedback information may be in binary.

When the UE determines the feedback information related to the checking result of each DL data according to the checking result of each DL data, the present specification provides four approaches for determining the feedback information.

Approach 1: the UE generates the feedback information including the checking results of each DL data according to the checking result of each DL data. That is, the feedback information includes the checking result of each DL data. For example, when the number of repetitions is 4, the checking on the first two DL data are failed and the checking on the last two DL data are successful, the feedback information is 0011.

Approach 2: the UE determines, based on the checking result of each of DL data, a number of times that the BS transmits DL data successfully, and then determines, based on the number of times that the BS transmits DL data successfully, the feedback information including the number of times that the BS transmits DL data successfully. That is, the feedback information indicates the number of times that the BS transmits DL data successfully. For example, when the number of repetitions is 8, the checking on the first two DL data are failed and the checking on the last six DL data are successful, the feedback information is 110.

In addition, in order to reduce the bits for sending the feedback information to a certain extent, the feedback information corresponding to the case where the checking on all the DL data is failed only once may be taken as the feedback information corresponding to the case where the checking on all the DL data are successful. That is, when receiving the feedback information corresponding to only one failed checking, the BS considers that the checking on all DL data are successful, which is shown as Table 2.

Table 2

| The actual number of successful checking | 0 | 1 | ...... | N-1 | N |
|---|---|---|---|---|---|
| Feedback information (including the actual number of successful checking for all DL data) | 0 | 1 | ...... | N-1 | N |
| Feedback information (in the case of reducing the bits) | 0 | 1 | ...... | N-1 | N-1 |

In Table 2, the number of repetitions is N, that is, the number of the DL data is N. The first line indicates the actual number of successful transmissions of all DL data, that is, the actual number of successful checking. The second line indicates the feedback information that corresponds to the number of all possible successful checking and includs the actual number of successful checking for all DL data.

The third line is for the case of reducing the bits of the feedback information by using N-1 to indicate the feedback information fed back when the checking on all the DL data are successful. When the feedback information received by the BS is N-1, the BS considers that all the DL data have been successfully received, regardless of whether the actual number of successful transmissions is N- 1 or N.

For example, when the number of repetitions is 8, and the checking on all the 8 DL data are successful, the actual number of successful checking is 8. Since the number 8 occupies 4 bits but the number 7 occupies 3 bits, it may take the number 7 as the feedback information corresponding to the case where the checking on all the 8 DL data are successful, i.e., 111.

Approach 3: the UE determines, based on the checking result of each DL data, a number of times the DL data transmissions are failed, and then determines, based on the number of times the DL data transmissions are failed, the feedback information including the number of times the DL data transmissions are failed. That is, the feedback information indicates the number of times the DL data transmissions are failed. For example, when the number of repetitions is 8, the checking on the first six DL data are failed and the checking on the last two DL data are successful, the number of times the DL data transmissions are failed is 6 and the feedback information is 110.

In addition, in order to reduce the bits for sending the feedback information to a certain extent, when the checking on only one DL data is failed and the checking on the other DL data are successful, the feedback information (i.e., 0) corresponding to the case where the checking on all the DL data are successful may be taken to represent the feedback information corresponding to the case where the checking is failed only once. In this way, except that the number of failed checking is 0, the actual number of failed checking for all the DL data is greater than the number of failed checking included in the feedback information by one, as shown in Table 3.

Table 3

| The actual number of failed checking | 0 | 1 | 2 | ...... | N-1 | N |
|---|---|---|---|---|---|---|
| Feedback information (the number of all possible failed checking) | 0 | 1 | 2 | ...... | N-1 | N |
| Feedback information (in the case of reducing the bits) | 0 | 0 | 1 | ...... | N-2 | N-1 |

In Table 3, the number of repetitions is N, that is, the number of the DL data is N. The first line indicates the actual number of failed checking on the various DL data, the second line indicates the feedback information corresponding to all possible failed transmissions (i.e., the number of failed checking), and the third line indicates for the case of reducing the bits of the feedback information by using 0 to represent the feedback information corresponding to the case where there is only one failed checking or no failed checking on all the DL data. In this way, except that the feedback information is 0, the number of failed checking included in the other feedback information is less than the actual number of failed checking by one. When the feedback information received by the BS is 0, the BS considers that all the DL data have been successfully received, regardless of whether the actual number of failed transmissions is 0 or 1.

For example, when the number of repetitions is 8, and there is only one failed checking on the 8 DL data, the actual number of failed checking is 1. However, it may take 0 as the feedback information, i.e., 0, corresponding to the case where there is only one failed checking. When receiving 0, the BS considers that the checking on all the 8 DL data are successful. When only two of the checking on the 8 DL data are failed, the actual number of failed checking is 2. However, it may take 1 to represent the feedback information corresponding to only two failed checking, and so on.

Approach 4: the UE determines a designated number set of successful transmissions of the various DL data based on the number of the various DL data, and determines an index value corresponding to each designated number in the designated number set. Then, the UE determines, based on the checking result of each DL data, a number of times that the BS transmits DL data successfully. Finally, the UE determines the index value corresponding to a target designated number matching the above number of times from the designated number set, and determines the feedback information including the index value corresponding to the target designated number. That is, it to determine the index value matching the actual number of times and determine the feedback information including the index value matching the actual number of times. If the actual number of times is not included in the designated number set, the designated number that is closest to and greater than the actual number of times is taken as the target designated number. In addition, it has to be fed back when the actual number of times of successful transmissions is 0, that is, to give the feedback corresponding to the case where the checking on all the DL data are failed.

For example, when the number of repetitions is 8, the designated number set indicating that the BS transmits DL data successfully may be [0,2,3,4,5,6,7,8], and the index values corresponding to the various designated numbers in the designated number set is [0,1,2,3,4,5,6,7]. The index value 0 indicates that the checking on all the DL data are failed. When the actual number of times that the 8 DL data are transmitted successfully is 6, the target designated number matching the actual number of times in the designated number set is 6. Since the index value corresponding to the target designated number is 5, the feedback information is 101.

In addition, in order to reduce the bits for sending the feedback information to a certain extent, when the number of repetitions is greater than a number threshold, the designated number that is determined from the designated number set and is indicated that the various DL data are transmitted successfully is less than the number of repetitions. In this way, the maximum index value corresponding to the designated number in the designated number set may be reduced, thereby reducing the bits of the feedback information. The number threshold may be 8.

For example, when the number of repetitions is 16, the designated number set indicating that the BS transmits the DL data successfully may be [0,2,4,6,8,10,12,16], and the index values corresponding to the various designated numbers in the designated number set is [0,1,2,3,4,5,6,7]. The index value 0 indicates that the checking on all the DL data are failed. When the actual number of times that the 16 DL data are transmitted successfully is 8, the DL designated number in the designated number set matching the actual number of times is 8. Since the index value corresponding to the DL designated number is 4, the feedback information is 100. When the actual number of times that the 16 DL data are transmitted successfully is 9, since the designated number set does not include 9, it may take a designated number that is closest to and greater than the actual number of times as the target designated number, i.e., 10. Since the index value corresponding to the target designated number is 5, the feedback information is 101.

After the UE sends the feedback information to the BS, the BS may parse the received feedback information according to the feedback information and a feedback scheme predetermined between the BS and the UE, and determine the checking result of each DL data in the feedback information. Then, the BS determines the channel compensation parameter based on the checking results of each DL data in the feedback information, compensates, according to the channel compensation parameter, the channel quality parameter for transmitting the various DL data between the UE and the BS, and obtains the target channel quality parameter. Finally, the BS adjusts, according to the target channel quality parameter, a transmission strategy adopted for transmitting the various DL data between the UE and the BS, and obtains the adjusted transmission strategy. The feedback schemes may include: feeding back the checking results of all the DL data, feeding back the number of times that the DL data are transmitted successfully, feeding back the number of times that the DL data fails to be transmitted, feeding back the index value corresponding to the number of times that the DL data is transmitted successfully, and the like.

When determining the channel compensation parameter based on the checking result of each DL data in the feedback information, if the checking result of each DL data in the feedback information is successful in the feedback information, it means that the target channel quality parameter between the UE and the BS is relatively large. In this case, an average channel quality parameter by which the various DL data are transmitted between the UE and the BS may be compensated according to a preset upward compensation step size to obtain a target average channel quality parameter. The upward compensation step size means adding a specified value onto the average channel quality parameter.

In addition, the formula for the upward compensation of the average channel quality parameter between the UE and the BS is:

$$CQI_{avg}(t) = CQI_{avg}(t-1) + \Delta_{up}.$$

$CQI_{avg}(t)$ may indicate the target average channel quality parameter after the upward compensation at time t, $CQI_{avg}(t-1)$ may indicate the average channel quality parameter at time t-1, that is, the average channel quality parameter before the compensation. $\Delta_{up}$ may indicate the preset upward compensation step size.

If there are failure(s) in the checking result of each DL data in the feedback information, it means that the channel quality parameter between the UE and the BS is relatively small. In this case, it may further determine a changing trend of the channel quality parameter between the UE and the BS, steadily deteriorating or changing from a poor state to a good state, based on the number of successful checking results of all the DL data or the number of failed checking results of all the DL data. Then, according to the changing trend of the channel quality parameter between the UE and the BS, it is to determine the channel compensation parameter for adjusting the channel quality parameter, so as to adjust the downward compensation step size. The downward compensation step size indicates a specific value subtracted from the average channel quality parameter.

In particular, the BS may determine the channel compensation parameter based on the checking result of each DL data and the weights corresponding to the checking result. For the repetitions, the later the DL data is transmitted, the greater the weight corresponding to the checking result of the DL data is. The sum of the weights of all the checking results is 1. When the channel compensation parameter is 1, it means that the checking results of all the DL data are failed.

The formula for determining the channel compensation parameter is:

$$\theta = 1 - \alpha_1 * \mathrm{HARQ}_{\mathrm{Tx1}} - \alpha_2 * \mathrm{HARQ}_{\mathrm{Tx2}} -, \ldots, -\alpha_n * \mathrm{HARQ}_{\mathrm{Txn}}.$$

$\theta$ indicates the channel compensation parameter, $\alpha_n$ indicates the weight corresponding to the checking result of the n-th DL data, and $\mathrm{HARQ}_{\mathrm{Txn}}$ indicates the checking result of the n-th DL data for feedback.

For example, when the number of repetitions is 4 and the feedback information is 0011, the checking result of each DL data are 0, 0, 1, 1 respectively, and $[\alpha_1, \alpha_2, \alpha_3, \alpha_4]$ = [0.1,0.2,0.3,0.4]. Therefore, the channel compensation parameter is 1-0.3-0.4=0.3, that is, $\theta$=0.3.

After the channel compensation parameter is determined, the preset downward compensation step size is adjusted, and the average channel quality parameter used when the BS transmits the various DL data is compensated according to the adjusted downward compensation step size.

The formula for the downward compensation of the average channel quality parameter used when the BS transmits the various DL data is:

$$\mathrm{CQI}_{\mathrm{avg}}(t) = \mathrm{CQI}_{\mathrm{avg}}(t-1) - \theta * \Delta_{\mathrm{down}}.$$

$\mathrm{CQI}_{\mathrm{avg}}(t)$ may indicate the target average channel quality parameter after the downward compensation at time t, $\mathrm{CQI}_{\mathrm{avg}}(t-1)$ may indicate the average channel quality parameter at time t-1, i.e., the average channel quality parameter before the compensation. $\Delta_{\mathrm{down}}$ may indicate the preset downward compensation step size, and $\theta * \Delta_{\mathrm{down}}$ may indicate the adjusted downward compensation step size.

In addition, the BS does not compensate the average channel quality parameter for transmitting the various DL data between the UE and the BS until receiving the feedback information, that is,

$$\mathrm{CQI}_{\mathrm{avg}}(t) = \mathrm{CQI}_{\mathrm{avg}}(t-1).$$

After determining the target channel quality parameter, the BS may adjust, according to the target channel quality parameter, the transmission strategy adopted for transmitting the various DL data between the UE and the BS and obtain the adjusted transmission strategy. The adjusted transmission strategy may include a target MCS and an adjusted number of repetitions.

For the MCS, the BS may first determine the target MCS that has a mapping relationship with the target channel quality parameter according to the mapping relationship between target channel quality parameters and transmission strategies between the BS and the UE. Then, the BS adjusts the transmission strategy adopted for transmitting the various DL data between the BS and the UE according to the target MCS and obtains the adjusted transmission strategy. That is, the target MCS is determined as the transmission strategy adopted for subsequent data transmissions between the BS and the UE. The order of the MCS is positively correlated with the size of the target channel quality parameter. That is, the greater the target channel quality parameter is, the higher the order of the MCS is.

When the order of the MCS adopted for transmitting the various DL data between the BS and the UE is equal to a maximum value or a minimum value, the BS may determine the adjusted number of repetitions according to the number of repetitions adopted for transmitting the various DL data between the BS and the UE and the target channel quality parameter, and adjust the number of repetitions adopted for transmitting the various DL data between the BS and the UE according to the adjusted number of repetitions. That is, the adjusted number of repetitions is determined as the transmission strategy adopted for subsequent data transmissions between the BS and the UE. The number of repetitions is negatively correlated with the size of the target channel quality parameter. That is, the greater the target channel quality parameter is, the smaller the number of repetitions is.

In the case where the order of the MCS adopted for transmitting the various DL data between the BS and the UE is equal to the maximum value while the target channel quality parameter is increasing, it takes a number of repetitions smaller than the number of repetitions adopted for transmitting the various DL data between the BS and the UE as the adjusted number of repetitions.

That is, when the order of the MCS is equal to the maximum value while the average CQI is increasing, the number of repetitions may be reduced by adjusting from the current number of repetitions to the next available smaller number of repetitions. For example, the current number of repetitions is 4 and the next available smaller number of repetitions is 3.

In the case where the order of the MCS adopted for transmitting the various DL data between the BS and the UE is equal to the minimum value while the target channel quality parameter is decreasing, the BS may take a number of repetitions greater than the number of repetitions adopted for transmitting the various DL data between the BS and the UE as the adjusted number of repetitions.

When the order of the MCS has been adjusted to the minimum value while the average CQI is decreasing, it may be adjusted from the current number of repetitions to the next available greater number of repetitions, that is, the number of repetitions is increased to ensure reliability. For example, the current number of repetitions is 4 and the next available greater number of repetitions is 5.

For the number of repetitions, the BS may first determine the adjusted number of repetitions according to the target channel quality parameter and the number of repetitions adopted for transmitting the various DL data between the BS and the UE, and adjust the number of repetitions adopted for transmitting the various DL data between the BS and the UE according to the adjusted number of repetitions. That is, the adjusted number of repetitions is determined as the transmission strategy adopted for subsequent data transmissions between the BS and the UE.

If the target channel quality parameter is greater than the channel quality parameter for transmitting the various DL data between the UE and the BS, it may take the number of repetitions smaller than the number of repetitions adopted for transmitting the various DL data between the BS and the UE as the adjusted number of repetitions; if the target channel quality parameter is smaller than the channel quality parameter for transmitting the various DL data between the UE and the BS before the compensation, it may take the number of repetitions greater than the number of repetitions adopted for transmitting the various DL data between the BS and the UE as the adjusted number of repetitions.

When the number of repetitions adopted for transmitting the various data between the BS and the UE is equal to the maximum or minimum value, the target MCS that has the mapping relationship with the target channel quality parameter may be determined according to the target channel quality parameter. The target MCS is determined as the transmission strategy adopted for the subsequent data transmissions between the BS and the UE.

In the case where the number of repetitions adopt when the various DL data are transmitted between the BS and the UE is equal to the maximum value while the target channel quality parameter is decreasing, an MCS whose order is smaller than the MCS adopted for transmitting the various DL data between the BS and the UE may be taken as the target MCS.

In the case where the number of repetitions adopted for transmitting the various DL data between the BS and the UE is equal to the minimum value while the target channel quality parameter is increasing, an MCS whose order is greater than the MCS adopted for transmitting the various DL data between the BS and the UE may be taken as the target MCS.

After determining the adjusted transmission strategy adopted for the subsequent data transmissions between the BS and the UE according to the target channel quality parameter, the BS may send the adjusted transmission strategy that has been determined to the UE, so that according to the adjusted transmission strategy that is received, the UE updates the transmission strategy that is stored in the UE and is adopted for transmitting the various DL data between the UE and the BS. That is, the UE and the BS synchronize the adjusted transmission strategy adopted for subsequent data transmissions.

For the target MCS in the adjusted transmission strategy, the BS may add the target MCS to downlink control information (DCI), and send the DCI with the target MCS added to the UE through the PDCCH. The UE receives the target MCS sent by the BS through the DCI, and updates, according to the target MCS, the MCS that is stored in the UE and is adopted for transmitting the various DL data.

In addition, in order to avoid increasing the burden of transmissions and blind detections through the PDCCH in the system due to updating the MCS too frequently, a valid working duration of the MCS is configured for the semi-static scheduling. The BS sends the target MCS to the UE for update when monitoring that the MCS adopted for transmitting the various DL data between the BS and the UE runs longer than the valid working duration. That is, if the MCS adopted for transmitting the various DL data between the BS and the UE is within the valid working duration, the target MCS, even if determined, is not to be sent to the UE for updating the MCS. Instead, it is to update the MCS by sending the DCI through the first available PDCCH after the valid duration.

In particular, the update of the scheduling information such as the MCS in semi-static scheduling is expected to take the parameters such as an update period of MCS, a configuration period of semi-static scheduling, a configuring and scheduling period of PDCCH together into account, and then perform the operation of updating the scheduling information such as the MCS.

In addition, the minimum period that is capable of being configured is 1 slot for the DL semi-static scheduling, i.e., the semi-persistent scheduling, and 2 symbols for the UL grant-free scheduling. The minimum period of the search opportunity of the PDCCH through which the DCI is sent may be 1 slot. The update period of MCS is related to the channel state and a reporting period of instantaneous CQI.

For the adjusted number of repetitions, the BS may send it to the UE in three ways.

In the first way, the adjusted number of repetitions is configured to the UE via radio resource control (RRC).

In particular, after the media access control (MAC) layer of the BS determines the adjusted number of repetitions, the adjusted number of repetitions is reported to the RRC layer. After receiving the adjusted number of repetitions, the RRC layer triggers an RRC reconfiguration according to the adjusted number of repetitions, so as to inform the UE of the adjusted number of repetitions.

In the second way, the BS sends the adjusted number of repetitions to the UE via DCI.

The BS may implicitly send the adjusted number of repetitions to the UE via the DCI, or may add a field in the DCI for explicitly sending the adjusted number of repetitions to the UE.

With respect to implicitly sending the adjusted number of repetitions.

In the case where the MAC layer of the BS detects that the order of the MCS is equal to the maximum or minimum value and detects that the number of repetitions is expected to be adjusted, the DCI that carries an instruction of updating the number of repetitions in the semi-static scheduling is sent in the next available PDCCH.

After receiving the DCI, the UE reduces the current number of repetitions by default and adopts an available number of repetitions smaller than the current number of repetitions when detecting that the order of the MCS is equal to the maximum value. For example, when the available numbers of repetitions are 2, 3, 4, 5, 6, 7, 8 and 16 and the current number of repetitions is 5, the adjusted number of repetitions is 4.

The UE increases the current number of repetitions by default and adopts an available number of repetitions greater than the current number of repetitions when detecting that the order of the MCS is equal to the minimum value. For example, when the available numbers of repetitions are 2, 3, 4, 5, 6, 7, 8 and 16 and the current number of repetitions is 5, the adjusted number of repetitions is 6.

With respect to explicitly sending the adjusted number of repetitions.

The BS adds one new field in the DCI for indicating the number of repetitions. The new field may be named *Index of number of repetition.* Currently, it may be set to 3 bits and indicate up to 8 options as the indexes, for example, {2, 3, 4, 5, 6, 7, 8, 16}. If there are more options for the number of repetitions in future, the field may be extended to support more numbers of repetitions.

It can be noted that when the adjusted number of repetitions is sent via the DCI, the adjusted number of repetitions takes effect at the slot at which the DCI is sent.

In the third way, the adjusted number of repetitions is sent to the UE via the media access control-control element (MAC CE).

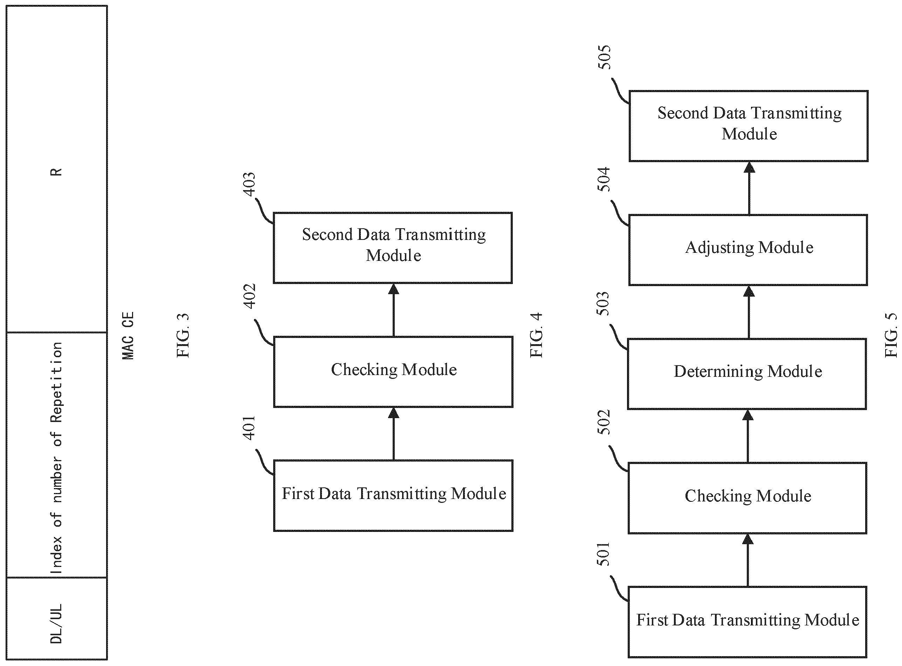

In particular, when the MAC layer of the BS detects that the number of repetitions is expected to be adjusted, the adjusted number of repetitions may be added into the MAC CE and be sent to the UE through a physical downlink shared channel (PDSCH). The UE feeds back whether the MAC CE is received correctly through ACK/NACK. If the ACK is received by the BS, the adjusted number of repetitions included in the MAC CE takes effect at the next slot behind the slot at which the UE returns the ACK. The data structure of the MAC CE is illustrated in FIG. 3.

In FIG. 3, *DL/UL* indicates the UL or DL for which the MAC CE is suitable, and *Index of number of Repetition* indicates the index of the number of repetitions, which is 3 bits currently and indicates up to 8 options, for example, {2, 3, 4, 5, 6, 7, 8, 16}. In future, if there are more options for the number of repetitions, it may be extended through a reserved field (i.e., R).

With respect to the adjusted number of repetitions that is sent by the BS and received by the UE, the UE may receive the adjusted number of repetitions sent by the BS via the RRC, the DCI or the MAC CE, and in accordance with the adjusted number of repetitions, update the number of repetitions that is stored in the UE and is adopted for transmitting the various DL data.

In addition, since the wireless channel varies rapidly, in order to avoid the problem that the number of repetitions is updated too frequently, it may configure a valid working duration for the number of repetitions. When monitoring that the number of repetitions adopted for transmitting the various DL data between the BS and the UE runs longer than the valid working duration, the BS sends the adjusted number of repetitions to the UE for update. That is, if the number of repetitions adopted for transmitting the various DL data between the BS and the UE is within the valid working duration, the adjusted number of repetitions, even if determined, is not sent to the UE to update the number of repetitions.

The above is the DL transmission case, in which the UE sends the feedback information to the BS, and the BS determines the adjusted transmission strategy according to the feedback information and sends the adjusted transmission strategy to the UE in different ways. Next, it is to describe that the adjusted transmission strategy is determined in the UL transmission case. In particular, the method that the BS determines the adjusted transmission strategy in the UL transmissions is similar to the method of determining the adjusted transmission strategy in the DL transmissions, except that the channel quality parameter represented by the CQI in the DL transmissions is replaced by the channel quality parameter represented by SINR.

With respect to the UL transmissions.

After receiving various UL data transmitted by the UE and determining the checking result of each UL data, the BS determines the channel compensation parameter based on the checking results of each UL data, and according to the channel compensation parameter, compensates the channel quality parameter for transmitting the various UL data between the UE and the BS to obtain the target channel quality parameter, and finally, adjusts, according to the target channel quality parameter, the transmission strategy adopted for transmitting the various UL data between the BS and the UE to obtain the adjusted transmission strategy. The channel quality parameter may include an average SINR.

When the checking result of each UL data is successful during determining the channel compensation parameter based on the checking result of each UL data, it means that the target channel quality parameter is relatively large. In this case, it may compensate, according to a preset upward compensation step size, the average channel quality parameter for transmitting the various UL data between the UE and the BS to obtain the target channel quality parameter. The upward compensation step size means adding a specified value onto the average channel quality parameter.

In addition, the formula for the upward compensation of the average channel quality parameter between the UE and the BS is: $SINR_{avg}(t) = SINR_{avg}(t - 1) + \Delta_{up}$. $SINR_{avg}(t)$ may indicate the target average channel quality parameter after the upward compensation at time t, $SINR_{avg}(t - 1)$ may indicate the average channel quality parameter at time t-1, that is, the channel quality parameter before the compensation, and $\Delta_{up}$ may indicate the preset upward compensation step size.

When there is failure(s) in the checking result of each UL data, it means that the target channel quality parameter is relatively small. In this case, it may further determine the changing trend of the channel quality parameter between the UE and the BS, steadily deteriorating or changing from a poor state to a good state, based on the number of successful checking results of all the UL data or the number of failed checking results of all the DL data. Then, according to the changing trend of the channel quality parameter between the UE and the BS, it is to determine the channel compensation parameter for adjusting the channel quality parameter, so as to adjust the downward compensation step size. The downward compensation step size indicates a specific value subtracted from the average channel quality parameter.

In particular, the channel compensation parameter may be determined based on the checking result of each UL data and the weight corresponding to each checking result. For the repetitions, the later the UL data is transmitted, the greater the weight corresponding to the checking result of the UL data is. The sum of the weights of all the checking results is 1. When the channel compensation parameter is 1, it means that the checking results of all the UL data are failed.

The formula for determining the channel compensation parameter is:

$$\theta = 1 - \alpha_1 * H_{Tx1} - \alpha_2 * H_{Tx2} -, ..., -\alpha_n * H_{Txn}.$$

$\theta$ indicates the channel compensation parameter, $\alpha_n$ indicates the weight corresponding to the checking result of the n-th UL data, and $H_{Txn}$ indicates the checking result of the n-th UL data.

After the channel compensation parameter is determined, the preset downward compensation step size is adjusted, and the average channel quality parameter is compensated according to the adjusted downward compensation step size.

The formula for the downward compensation of the average channel quality parameter between the UE and the BS is:

$$SINR_{avg}(t) = SINR_{avg}(t - 1) - \theta * \Delta_{down}.$$

$SINR_{avg}(t)$ may indicate the channel quality parameter after the downward compensation at time t, i.e., the target channel quality parameter, $SINR_{avg}(t - 1)$ may indicate the average channel quality parameter at time t-1, i.e., the channel quality parameter before the compensation, $\Delta_{down}$ may indicate the preset downward compensation step size, and $\theta * \Delta_{down}$ may indicate the adjusted downward compensation step size.

After determining the target channel quality parameter, the BS may determine the adjusted transmission strategy according to the target channel quality parameter, and adjust, according to the adjusted transmission strategy, the transmission strategy adopted for transmitting the various UL data between the UE and the BS. The adjusted transmission strategy may include the target MCS and the adjusted number of repetitions.

The method that the BS determines and sends the adjusted transmission strategy to the UE in the UL transmissions is the same as the method that the BS determines and sends the adjusted transmission strategy to the UE in the DL transmissions, which is not repeated here. The DL transmissions may include the semi-persistent scheduling, and the UL transmissions may include the UL grant-free scheduling.

In addition, in the dynamic scheduling, the BS may directly send the adjusted transmission strategy to the UE via the DCI once determining the adjusted transmission strategy adopted for the data transmissions between the UE and the BS.

The above describes the data transmission methods provided by the examples of the present specification. Based on the same concept, the present specification also provides corresponding apparatuses, storage media and electronic devices.

FIG. 4 is a schematic structural diagram of a data transmission apparatus provided by an example of the present specification, and the apparatus includes:

a first data transmitting module 401, configured to receive, by UE, various DL data transmitted by a BS; and/or, transmit, by the UE, various UL data to the BS, so that the BS obtains checking results of the various UL data; where various data transmitted by a transmitter is obtained by encoding a same data with redundant information separately; a checking module 402, configured to when the UE receives the various DL data transmitted by the BS, for each of the various DL data, check, by the UE, the DL data according to other DL data of the various DL data received before receiving the DL data, obtain, by the UE, a checking result of the DL data, and feed, by the UE, the checking results of each DL data back to the BS; and

a second data transmitting module 403, configured to receive a transmission strategy that has been adjusted by the BS, and perform data transmissions with the BS in accordance with the adjusted transmission strategy; where the adjusted transmission strategy is determined by the BS according to a target channel quality parameter, and the target channel quality parameter is determined by the BS based on the checking result of each of the various data transmitted by the transmitter.

Optionally, the checking module 402 is specifically configured to determine, based on the checking result of each DL data, feedback information related to the checking result of each DL data, and send the feedback information to the BS.

Optionally, the checking module 402 is specifically configured to determine, based on the checking result of each DL data, a number of times that the BS transmits DL data successfully; and determine, based on the number of times that the BS transmits DL data successfully, the feedback information including the number of times that the BS transmits DL data successfully.

Optionally, the checking module 402 is specifically configured to determine an index value matching a number of times that the BS transmits DL data successfully, and determine the feedback information including the index value.

Optionally, the target channel quality parameter is obtained by the BS by compensating a channel quality parameter used when the transmitter transmits the various data according to a channel compensation parameter. The channel compensation parameter is determined by the BS based on the checking result of each of the various data transmitted by the transmitter.

Optionally, the adjusted transmission strategy includes at least an MCS.

The target MCS is determined by the BS according to a mapping relationship between target channel quality parameters and transmission strategies.

Optionally, the adjusted transmission strategy at least includes an adjusted number of repetitions.

The adjusted number of repetitions is obtained by the BS, when an MCS adopted by the transmitter for transmitting the various data has reached a maximum or minimum value, through adjusting a number of repetitions adopted by the transmitter for transmitting the various data according to the target channel quality parameter.

Optionally, the second data transmitting module 403 is specifically configured to receive the adjusted number of repetitions sent by the BS via RRC; or receive the adjusted number of repetitions sent by the BS via DCI; or receive the adjusted number of repetitions sent by the BS via an MAC CE.

FIG. 5 is a schematic structure diagram of a data transmission apparatus according to an example of the present specification.

A first data transmitting module 501, configured to receive, by a BS, various UL data transmitted by UE; and/or, transmit, by the BS, various DL data to the UE, so that the UE obtains checking results of the various DL data; where various data transmitted by a transmitter is obtained by encoding a same data with redundant information separately;

a checking module 502, configured to when the BS receives the various UL data transmitted by the UE, for each of the various UL data, check, by the BS, the UL data according to other UL data of the various UL data received before receiving the UL data, and obtain, by the BS, a checking result of the UL data; and when the BS transmits the various DL data to the UE, receive the checking results of the various DL data fed back from the UE;

a determining module 503, configured to determine a target channel quality parameter based on the checking result of each of the various data transmitted by the transmitter;

an adjusting module 504, configured to obtain an adjusted transmission strategy by adjusting a transmission strategy adopted by the transmitter for transmitting the various data according to the target channel quality parameter; and

a second data transmitting module 505, configured to send the adjusted transmission strategy to the UE, so that the UE performs data transmissions with the BS in accordance with the adjusted transmission strategy.

Optionally, the checking module 502 is specifically configured to receive feedback information sent by the UE, and determine, according to the feedback information, the checking results of the various DL data fed back from the UE. The checking results of the various DL data are obtained by the UE through checking each of the various DL data transmitted by the BS according to other DL data of the various DL data received before receiving the DL data.

Optionally, the determining module 503 is specifically configured to determine a channel compensation parameter based on the checking result of each of the various data transmitted by the transmitter; and obtain the target channel quality parameter by compensating a channel quality parameter used when the transmitter transmits the various data according to the channel compensation parameter.

Optionally, the adjusted transmission strategy includes at least an MCS.

The adjusting module 504 is specifically configured to determine, according to a mapping relationship between target channel quality parameters and the transmission strategies, a target MCS corresponding to the target channel quality parameter for transmitting the various data as the adjusted transmission strategy.

Optionally, the adjusted transmission strategy at least includes a number of repetitions.

The adjusting module 504 is specifically configured to when an MCS adopted by the transmitter for transmitting the various data has reached a maximum or minimum value, adjust, according to the target channel quality parameter, a number of repetitions adopted by the transmitter for transmitting the various data and obtain an adjusted number of repetitions as the adjusted transmission strategy.

Optionally, the second data transmitting module 505 is specifically configured to send the adjusted number of repetitions to the UE via RRC; or, send the adjusted number of repetitions to the UE via DCI; or, send the adjusted number of repetitions to the UE via an MAC CE.

Optionally, the second data transmitting module 505 is specifically configured to send the adjusted transmission strategy to the UE when monitoring that the transmission strategy adopted by the transmitter for transmitting the various data runs longer than a valid working duration.

The present specification also provides a computer-readable storage medium storing a computer program, and the computer program, when being executed by one or more processors, performs the above data transmission methods provided in FIG. 1 and FIG. 2.

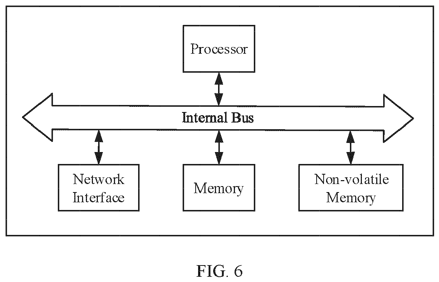

Based on the data transmission methods illustrated in FIG. 1 and FIG. 2, the examples of the present specification also provide a schematic structural diagram of the electronic device illustrated in FIG. 6. As illustrated in FIG. 6, at a hardware level, the electronic device includes a processor, an internal bus, a network interface, a memory, and a non-volatile memory, and of course may also include hardware required by other services. The processor reads the corresponding computer program from the non-volatile memory into the memory and then runs it, so as to implement the data transmission methods described in FIG. 1 and FIG. 2 above.

Of course, in addition to software implementations, the present specification does not exclude other implementations, such as through a logic element or a combination of software and hardware. That is to say, the execution subject of the according to processing process is not limited to various logic units, but may also be the hardware or the logic elements.

In the 1990s, the improvement on one technology can be clearly distinguished as the improvement on the hardware (e.g., the improvement on a circuit structure such as diode, transistor, switch, etc.) or the improvements on the software (the improvement on a method process). However, with the development of technologies, the improvement on many method processes may be regarded as a direct improvement on the hardware circuit structures today. Nearly all the designers achieve the corresponding hardware circuit structure by programming an improved method process into the hardware circuit. Therefore, it would be wrong to say that the improvement on the method process cannot be implemented by hardware physical modules. For example, a programmable logic device (PLD) (e.g., a field programmable gate array (FPGA)) is such an integrated circuit, the logic function of which is determined through programming the device by a user. It is programmed by the designers themselves to "integrate" a digital system onto the PLD, instead of asking a chip manufacturer to design and make a dedicated integrated circuit chip. Moreover, nowadays, instead of making the integrated circuit chips by hand, this kind of programming is mostly implemented by a software "logic compiler", which is similar to a software compiler used in developing and writing programs, but whose original codes before compiling are written in a specific programming language called a hardware description language (HDL). There is not only one kind of HDL, but many kinds, e.g., advanced Boolean expression language (ABEL), Altera hardware description language /(AHDL), Confluence, Cornell university programming Language (CUPL), HDCal, Java hardware description language (JHDL), Lava, Lola, MyHDL, PALASM, Ruby hardware description language (RHDL), etc. Currently, very-high-speed integrated circuit hardware description language (VHDL) and Verilog are the most popular ones. It can also be clear to those skilled in the art that it is easy to achieve the hardware circuit for implementing the logic method process only by performing a little logical programming for the method process in the above-mentioned hardware description languages and programming into the integrated circuit.

The controller may be implemented in any suitable way, for example, the controller may take the form of a microprocessor or a processor with a computer readable medium storing computer readable program codes (such as a software or a firmware) executable by the (micro)processor, a logic gate, a switch, an application specific integrated circuits (ASIC), a programmable logic controller and an embedded microcontroller. The examples of the controller include but not limited to the according to microcontrollers: ARC 625D, Atmel AT91SAM, Microchip PIC18F26K20 and Silicone Labs C8051F320. A memory controller may also be implemented as a part of the control logic of the memory. Those skilled in the art also know that, besides implementing the controller in pure computer-readable program codes, it is surely possible to make the controller implement the same functions in the form of a logic gate, a switch, an ASIC, a programmable logic controller, an embedded microcontroller and the like through the logic programming of the method process. Therefore, such a controller may be regarded as a hardware component, and the means included in it for implementing various functions may also be regarded as structures within the hardware component. Alternatively, the means for implementing the various functions may even be regarded as not only the software modules implementing the method but also the structures within the hardware component.

The systems, apparatus, modules, or units illustrated in the above examples may be implemented specifically by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For convenience of description, the above apparatuses are described separately in terms of various units which are divided based on functions. Of course, the functions of the various units may be implemented in one software and/or hardware or a plurality of software and/or hardware when the present specification is implemented.

It can be understood by those skilled in the art that the examples of the present specification may be provided as methods, systems, or computer program products. Accordingly, the examples of the present specification may take the form of an entirely hardware, an entirely software, or a combination of software and hardware. Further, the present specification may take the form of a computer program product implemented on one or more computer-usable storage media (including, but not limited to, one or more disk memories, one or more CD-ROMs, one or more optical memories, etc.) that include computer-usable program codes therein.

The present specification is described by reference to flowcharts and/or block diagrams of the methods, the apparatuses (systems) and the computer program products according to the examples of the present specification. It can be understood that each procedure in the flowcharts and/or each block in the block diagrams, and the combination of certain procedures in the flowcharts and/or the combination of certain blocks in the block diagrams, may be implemented by computer program instructions. These computer program instructions may be provided to one or more processors of a general computer, a specialized computer, an embedded processing device or another programmable data processing device to produce a machine, so that the instructions executed by the one or more processors of the computer or another programmable data processing device produce one or more apparatuses for implementing the functions specified by one or more procedures in the flowcharts and/or one or more blocks in the block diagrams.

In addition, these computer program instructions may also be stored in one or more computer-readable memories capable of directing a computer or other programmable data processing devices to operate in a particular manner, so that the instructions stored in the one or more computer-readable memories produce a manufacture including an instruction device that implements a function specified by one or more procedures in the flowcharts and/or one or more blocks in the block diagrams.

These computer program instructions may also be loaded onto a computer or other programmable data processing devices, so that a series of operational steps are performed on the computer or the other programmable devices to produce a computer-implemented processing. Thereby, the instructions executed on the computer or the other programmable devices provide steps for implementing the functions specified by one or more procedures in the flowcharts and/or one or more blocks in the block diagrams.

In a typical configuration, the computing device includes one or more processors (CPUs), one or more input/output interfaces, one or more network interfaces, and one or more memories.

The memory may take the form of a non-permanent memory in a computer readable medium, a random access memory (RAM), and/or a nonvolatile memory, for example, a read-only memory (ROM) or a flash RAM. The memory is an example of the computer-readable medium.

The computer-readable medium, being either permanent or non-permanent and being either removable or non-removable, may be implemented by any method or technology for storing information. The information may include computer readable instructions, data structures, modules of a program, or other data. Examples of the computer storage medium include, but not limited to, a phase change memory (PRAM), a static random access memory (SRAM), a dynamic random access memory (DRAM), other types of RAM, an ROM, an electrically erasable programmable read-only memory (EEPROM), a flash memory or other memory technologies, a compact disc read-only memory (CD-ROM), a digital versatile disc (DVD) or other optical storages, a magnetic tape cartridge, a tape magnetic disk storage or other magnetic storage devices, or any other non-transmission medium, which may be used for storing the information that can be accessed by a computing device. As defined herein, the computer-readable medium excludes transitory computer-readable media, such as modulated data signals and carrier waves.

It is also noted that the term "including", "containing", or any variation thereof is intended to encompass non-exclusive inclusion, so that a process, method, article, or device including a series of elements includes not only those elements but also other elements not listed explicitly or those elements inherent to such a process, method, article, or device. Without more limitations, an element defined by the statement "including a..." shall not be precluded to include additional same elements present in a process, method, article or device including the element.

It can be understood by those skilled in the art that the examples of the present specification may be provided as methods, systems, or computer program products. Accordingly, the examples of the present specification may take the form of an entirely hardware, an entirely software, or a combination of software and hardware. Further, the present specification may take the form of a computer program product implemented on one or more computer-usable storage media (including, but not limited to, one or more disk memories, one or more CD-ROMs, one or more optical memories, etc.) that include computer-usable program codes therein.

The specification may be described in the general context of computer-executable instructions being executed by a computer, such as program modules. In general, the program modules include routines, programs, objects, components, data structures, etc. that perform particular tasks or implement particular abstract data types. The present specification may also be practiced in distributed computing environments where the tasks are performed by remote processing devices that are connected through a communications network. In the distributed computing environments, the program modules may be located on local and remote computer storage media which includes a storage device.

Each example in the present specification is described in a progressive manner, the same and similar parts of each example can be referred to each other, and each example focuses on the differences from other examples. Especially, the system examples are described more simply since they are substantially similar to the method examples, and their relevant parts may be referred to the description of the method examples.

The above only describes the examples of the present specification, and is not intended to limit the present specification. The present specification is subject to various changes and variations for those skilled in the art. Any modifications, equivalent substitutions, improvements, etc. made within the spirit and principle of the present specification shall be included within the scope of the claims of the present specification.

**Claims**

1. A data transmission method, comprising:

    receiving, by user equipment, UE, various downlink, DL, data transmitted by a base station, BS; and/or, transmitting, by the UE, various uplink, UL, data to the BS, so that the BS obtains checking results of the various UL data; wherein various data transmitted by a transmitter is obtained by encoding a same data with redundant information separately;
    when the UE receives the various DL data transmitted by the BS, for each of the various DL data,

        checking, by the UE, the DL data according to other DL data of the various DL data received before receiving the DL data,
        obtaining, by the UE, a checking result of the DL data, and
        feeding, by the UE, the checking result of each DL data back to the BS; and

    receiving a transmission strategy that has been adjusted by the BS, and performing data transmissions with the BS in accordance with the adjusted transmission strategy; wherein the adjusted transmission strategy is determined by the BS according to a target channel quality parameter, and the target channel quality parameter is determined by the BS based on the checking result of each of the various data transmitted by the transmitter.

2. The method according to claim 1, wherein feeding the checking result of each DL data back to the BS comprises:

    determining, based on the checking result of each DL data, feedback information related to the checking result of each DL data, and
sending the feedback information to the BS.

3. The method according to claim 2, wherein determining, based on the checking result of each DL data, the feedback information related to the checking result of each DL data comprises:

determining, based on the checking result of each DL data, a number of times that the BS transmits DL data successfully; and
determining, based on the number of times that the BS transmits DL data successfully, the feedback information comprising the number of times that the BS transmits DL data successfully.

4. The method according to claim 3, wherein determining, based on the number of times that the BS transmits DL data successfully, the feedback information comprising the number of times that the BS transmits DL data successfully comprises:

determining an index value matching the number of times that the BS transmits DL data successfully, and determining the feedback information comprising the index value.

5. The method according to claim 2, wherein determining, based on the checking result of each DL data, the feedback information related to the checking result of each DL data comprises:

determining, based on the checking result of each DL data, a number of times that the BS fails to transmit DL data; and
determining, based on the number of times that the BS fails to transmit DL data, the feedback information comprising the number of times that the BS fails to transmit DL data.

6. The method according to claim 1, wherein the target channel quality parameter is obtained by the BS through compensating a channel quality parameter used when the transmitter transmits the various data according to a channel compensation parameter, wherein the channel compensation parameter is determined by the BS based on the checking result of each of the various data transmitted by the transmitter.

7. The method according to claim 1, wherein the adjusted transmission strategy comprises at least a target modulation and coding scheme, MCS;
wherein the target MCS is determined by the BS according to a mapping relationship between target channel quality parameters and transmission strategies.

8. The method according to claim 1, wherein the adjusted transmission strategy at least comprises an adjusted number of repetitions;
wherein the adjusted number of repetitions is obtained by the BS, when a modulation and coding scheme, MCS, adopted by the transmitter for transmitting the various data has reached a maximum or minimum value, through adjusting a number of repetitions adopted by the transmitter for transmitting the various data according to the target channel quality parameter.

9. The method according to claim 8, wherein receiving the transmission strategy which has been adjusted by the BS comprises:

receiving the adjusted number of repetitions sent by the BS via radio resource control, RRC; or
receiving the adjusted number of repetitions sent by the BS via downlink control information, DCI; or
receiving the adjusted number of repetitions sent by the BS via a medium access control-control element.

10. A data transmission method, comprising:

receiving, by a base station, BS, various uplink, UL, data transmitted by user equipment, UE; and/or, transmitting, by the BS, various downlink, DL, data to the UE, so that the UE obtains checking results of the various DL data;
wherein various data transmitted by a transmitter is obtained by encoding a same data with redundant information separately;
when the BS receives the various LTL data transmitted by the UE, for each of the various UL data,

checking, by the BS, the LTL data according to other LTL data of the various LTL data received before receiving the UL data, and

obtaining, by the BS, a checking result of the UL data, and

when the BS transmits the various DL data to the UE,

receiving, by the BS, the checking results of the various DL data fed back from the UE,

determining a target channel quality parameter based on the checking result of each of the various data transmitted by the transmitter;

obtaining an adjusted transmission strategy by adjusting a transmission strategy adopted by the transmitter for transmitting the various data according to the target channel quality parameter; and

sending the adjusted transmission strategy to the UE, so that the UE performs data transmissions with the BS in accordance with the adjusted transmission strategy.

11. The method according to claim 10, wherein receiving the checking results of the various DL data fed back from the UE comprises:

receiving feedback information sent by the UE, and determining, according to the feedback information, the checking results of the various DL data fed back from the UE; wherein the checking results of the various DL data are obtained by the UE through checking each of the various DL data transmitted by the BS according to other DL data of the various DL data received before receiving the DL data.

12. The method according to claim 10, wherein determining the target channel quality parameter based on the checking result of each of the various data transmitted by the transmitter comprises:

determining a channel compensation parameter based on the checking result of each of the various data transmitted by the transmitter; and

obtaining the target channel quality parameter by compensating a channel quality parameter used when the transmitter transmits the various data according to the channel compensation parameter.

13. The method according to claim 10, wherein the adjusted transmission strategy comprises at least a modulation and coding scheme, MCS;

wherein obtaining the adjusted transmission strategy by adjusting the transmission strategy adopted by the transmitter for transmitting the various data according to the target channel quality parameter comprises:

determining, according to a mapping relationship between target channel quality parameters and transmission strategies, a target MCS corresponding to the target channel quality parameter transmission as the adjusted transmission strategy.

14. The method according to claim 10, wherein the adjusted transmission strategy at least comprises a number of repetitions;

wherein obtaining the adjusted transmission strategy by adjusting the transmission strategy adopted by the transmitter for transmitting the various data according to the target channel quality parameter comprises:

when an MCS adopted by the transmitter for transmitting the various data has reached a maximum or minimum value, adjusting, according to the target channel quality parameter, a number of repetitions adopted by the transmitter for transmitting the various data and obtaining an adjusted number of repetitions as the adjusted transmission strategy.

15. The method according to claim 14, wherein sending the adjusted transmission strategy to the UE comprises:

sending the adjusted number of repetitions to the UE via radio resource control, RRC; or,

sending the adjusted number of repetitions to the UE via downlink control information, DCI; or,

sending the adjusted number of repetitions to the UE via a media access control-control element.

16. The method according to claim 10, wherein sending the adjusted transmission strategy to the UE comprises:
sending the adjusted transmission strategy to the UE when monitoring that the transmission strategy adopted by the transmitter for transmitting the various data runs longer than a valid working duration.

17. A data transmission apparatus, comprising:

a first data transmitting module, configured to receive, by user equipment, UE, various downlink, DL, data transmitted by a base station, BS; and/or, transmit, by the UE, various uplink, UL, data to the BS, so that the BS obtains checking results of the various UL data; wherein various data transmitted by a transmitter is obtained by encoding a same data with redundant information separately;

a checking module, configured to when the UE receives the various DL data transmitted by the BS, for each of the various DL data,

check, by the UE, the DL data according to other DL data of the various DL data received before receiving the DL data,
obtain, by the UE, a checking result of the DL data, and
feed, by the UE, the checking result of each DL data back to the BS; and

a second data transmitting module, configured to receive a transmission strategy that has been adjusted by the BS, and perform data transmissions with the BS in accordance with the adjusted transmission strategy; wherein the adjusted transmission strategy is determined by the BS according to a target channel quality parameter, and the target channel quality parameter is determined by the BS based on the checking result of each of the various data transmitted by the transmitter.

18. A data transmission apparatus, comprising:

a first data transmitting module, configured to receive, by a base station, BS, various uplink, UL, data transmitted by user equipment, UE; and/or, transmit, by the BS, various downlink, DL, data to the UE, so that the UE obtains checking results of the various DL data; wherein various data transmitted by a transmitter is obtained by encoding a same data with redundant information separately;

a checking module, configured to when the BS receives the various UL data transmitted by the UE, for each of the various UL data,

check, by the BS, the UL data according to other UL data of the various UL data received before receiving the UL data, and
obtain, by the BS, a checking result of the UL data, and

when the BS transmits the various DL data to the UE,
receive, by the BS, the checking results of the various DL data fed back from the UE;
a determining module, configured to determine a target channel quality parameter based on the checking result of each of the various data transmitted by the transmitter;
an adjusting module, configured to obtain an adjusted transmission strategy by adjusting a transmission strategy adopted by the transmitter for transmitting the various data according to the target channel quality parameter; and
a second data transmitting module, configured to send the adjusted transmission strategy to the UE, so that the UE performs data transmissions with the BS in accordance with the adjusted transmission strategy.

19. A computer-readable storage medium storing a computer program, wherein the computer program, when executed by one or more processors, implements the method according to any one of claims 1-16.

20. An electronic device, comprising:

one or more memories,
one or more processors, and
a computer program stored in the one or more memories and capable of running on the one or more processors; wherein the one or more processors, when executing the computer program, implement the method according to any one of claims 1-16.

| UE | | BS |
|---|---|---|

S100: the BS transmits various DL data to the UE

S102: the UE checks each of the various DL data according to other DL data of the various DL data which are received before receiving the DL data

S104: the UE feeds the checking result of each DL data back to the BS

S106: the BS determines a target channel quality parameter based on the checking result of each DL data fed back from the UE

S108: the BS obtains an adjusted transmission strategy by adjusting a transmission strategy adopted by the BS for transmitting the various DL data according to the target channel quality parameter

S110: the BS sends the adjusted transmission strategy to the UE

S112: the BS transmits data to the UE by adopting the adjusted transmission strategy

S114: the UE receives the data transmitted by the BS in accordance with the adjusted transmission strategy

FIG. 1

```
┌──────┐                                        ┌──────┐
│  UE  │                                        │  BS  │
└──────┘                                        └──────┘
    │                                               │
    │  S200: the UE transmits various UL data to the BS
    │ ─────────────────────────────────────────────▶│
    │                                               │  S202: the BS obtains a
    │                                               │  checking result of each
    │                                               ├─┐  received UL data by
    │                                               │ │  checking the UL data
    │                                               │◀┘ according to other UL data of
    │                                               │  the various UL data received
    │                                               │  before receiving the UL data
    │                                               │
    │                                               │  S204: the BS determines a
    │                                               │    target channel quality
    │                                               ├─┐  parameter based on the
    │                                               │◀┘ checking results of each UL
    │                                               │         data
    │                                               │
    │                                               │  S206: the BS obtains an
    │                                               │    adjusted transmission
    │                                               │    strategy by adjusting a
    │                                               ├─┐ transmission strategy adopted
    │                                               │◀┘  by the UE for transmitting
    │                                               │      the various UL data
    │                                               │    according to the target
    │  S208: the adjusted transmission strategy is sent to  channel quality parameter
    │                        the UE                 │
    │◀──────────────────────────────────────────────│
    │                                               │
    │  S210: the BS transmits data to the UE by adopting
    │         the adjusted transmission strategy    │
    │◀──────────────────────────────────────────────│
    │                                               │
    │  ┌─┐ S212: the UE receives the data           │
    │  │ │ transmitted by the BS in accordance      │
    │◀─┘  with the adjusted transmission strategy   │
    │                                               │
```

FIG. 2

| DL/UL | Index of number of Repetition | R |
|-------|-------------------------------|---|

MAC CE

FIG. 3

| First Data Transmitting Module 401 | → | Checking Module 402 | → | Second Data Transmitting Module 403 |
|---|---|---|---|---|

FIG. 4

| First Data Transmitting Module 501 | → | Checking Module 502 | → | Determining Module 503 | → | Adjusting Module 504 | → | Second Data Transmitting Module 505 |
|---|---|---|---|---|---|---|---|---|

FIG. 5

FIG. 6

## INTERNATIONAL SEARCH REPORT

| International application No. |
| --- |
| **PCT/CN2022/103273** |

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS, CNTXT, CNKI, VEN, DWPI, ENTXT: 上行, 下行, 质量, 指示, 校验, 核验, 冗余, 信道, 参数, 重传, 重复传输, 反馈, 传输策略, 补偿; uplink, downlink, uci, dci, quality, id+, authenti, crc, verify, check, feedback, retrans+, channel, redundan, scheme, compensat+

**C. DOCUMENTS CONSIDERED TO BE RELEVANT**

| Category* | Citation of document, with indication, where appropriate, of the relevant passages | Relevant to claim No. |
| --- | --- | --- |
| A | CN 107800509 A (BEIJING XINWEI TELECOM TECHNOLOGY INC.) 13 March 2018 (2018-03-13)<br>entire document | 1-20 |
| A | CN 110299966 A (HUAZHONG UNIVERSITY OF SCIENCE AND TECHNOLOGY) 01 October 2019 (2019-10-01)<br>entire document | 1-20 |
| A | US 2009217144 A1 (ZIH CORP.) 27 August 2009 (2009-08-27)<br>entire document | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 November 2022** | **28 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/103273**

| Patent document cited in search report | | | Publication date (day/month/year) | Patent family member(s) | | | Publication date (day/month/year) |
|---|---|---|---|---|---|---|---|
| CN | 107800509 | A | 13 March 2018 | None | | | |
| CN | 110299966 | A | 01 October 2019 | CN | 110299966 | B | 19 May 2020 |
| US | 2009217144 | A1 | 27 August 2009 | CN | 1930814 | A | 14 March 2007 |
| | | | | DE | 112005000202 | T5 | 03 July 2008 |
| | | | | CN | 102185676 | A | 14 September 2011 |
| | | | | WO | 2005069525 | A1 | 28 July 2005 |
| | | | | GB | 0400968 | D0 | 18 February 2004 |

Form PCT/ISA/210 (patent family annex) (January 2015)